Europäisches Patentamt

(19) European Patent Office

Office européen des brevets

(11) Publication number: **0 121 021**
**B1**

(12) **EUROPEAN PATENT SPECIFICATION**

(45) Date of publication of patent specification: **15.07.87**

(21) Application number: **83306693.9**

(22) Date of filing: **03.11.83**

(51) Int. Cl.⁴: **B 65 G 39/02**

(54) **Conveyor roller.**

(30) Priority: **31.03.83 ZA 832342**

(43) Date of publication of application:
**10.10.84 Bulletin 84/41**

(45) Publication of the grant of the patent:
**15.07.87 Bulletin 87/29**

(84) Designated Contracting States:
**AT BE CH DE FR GB IT LI LU NL SE**

(56) References cited:
**AT-B- 215 887**
**AT-B- 358 468**
**DD-A- 8 430**
**DE-A-3 035 216**

(73) Proprietor: **Pyle, John**
**13 Wynand Marais Street Norkem Park**
**Kempton Park Transvaal (ZA)**
(73) Proprietor: **Oliveira, José Luis de**
**4 Kingscreek Kingswood Crescent**
**Riverclub Ext. 13 Sandton (ZA)**

(72) Inventor: **Pyle, John**
**13 Wynand Marais Street Norkem Park**
**Kempton Park Transvaal (ZA)**
Inventor: **Oliveira, José Luis de**
**4 Kingscreek Kingswood Crescent**
**Riverclub Ext. 13 Sandton (ZA)**

(74) Representative: **Slight, Geoffrey Charles et al**
**Graham Watt & Co. Riverhead**
**Sevenoaks Kent TN13 2BN (GB)**

Courier Press, Leamington Spa, England.

## Description

This invention relates to a conveyor roller or idler.

One problem associated with many conventional conveyor rollers is that the conveyor rollers are difficult to assemble and disassemble. Generally the conveyor roller comprises a drum having locating formations formed on or attached to the inner wall of the drum. Bearing assemblies are adapted to engage the formations on assembly of the roller. Exact location of the bearing assembly relative to the formations is frequently a problem. This problem generally tends to increase the cost of the idlers as well as increasing the cost of maintaining the conveyor. Where a conveyor roller needs to be repaired, the time necessary to effect repairs is important because down time of the conveyor generally means interruption of the process wherein the conveyor is used.

AT—B—215,887 describes a roller construction comprising a right circular cylindrical tubular member supported on a shaft by end caps each having an axial hole therethrough and a co-axial bearing located therein by means of which the tubular member is rotatably supported on the shaft. The end caps each include first and second relatively movable co-operant portions at least one of which has a tapered surface the first end cap portion being of plastics material and means is provided to urge the relatively movable co-operant end cap portions into co-operant engagement, the tapered surface, on engagement, being adapted to expand an annular, radially outer edge portion of the first end cap portion radially outwardly into frictional engagement with an inner wall of the tubular member thereby to secure the end caps to the tubular member.

It is an object of this invention to provide a conveyor roller which may be easily assembled, disassembled and maintained.

## Summary of the Invention

According to the invention, and proceeding from the disclosure of AT—B—215,887, said first end cap portion is formed in one piece and mounts both the bearing and the tubular member.

The large body of plastics material is capable of absorbing shock forces efficiently, thereby protecting the bearing in use of the roller. Also, the extra simplicity of the construction extends to assembling and replacing the end cap.

Optionally, there is provided for the radially inner face of the edge portion to taper, and to cooperate with the adjacent radially outer surface of the second end cap portion. The second end cap portion may have the tapered surface.

Preferably, however, both portions have tapered surfaces.

The means for urging the two portions into co-operant engagement may comprise a plurality of screws which are located in holes formed in the end cap and evenly spaced around the central axis thereof, the screws being engaged in threaded holes formed in said second end cap portion, rotation of the screws in use being adapted to move the two portions into and out of engagement in use.

Said first end cap portion may have a locating formation formed thereon to ensure aligned engagement with the tubular member.

The invention also provides at least for the said first end cap portion optionally to be formed of polyurethane.

The tubular member may be formed from steel or the like, or alternatively from a suitable plastics material. Specifically envisaged in this regard is an unplasticised polyvinylchloride (uPVC) which is sufficiently rigid and strong for this type of application. Also, it will be possible for the tubular member to be formed of an outer sleeve of unplasticised polyvinylchloride and an inner sleeve of steel.

The present invention extends to an end cap adapted to be located in a tubular member of a conveyor roller, the end cap comprising a plastics body having an axial hole passing therethrough adapted to have a bearing located therein and adapted to have a support shaft passing therethrough in rotational engagement with the bearing, the end cap including first and second relatively movable co-operant portions at least one of which has a tapered surface, the first end cap portion being of plastics material, means being provided to urge the two portions into co-operant engagement, the tapered surface on engagement being adapted to urge an annular, radially outer edge portion of the first end cap portion radially outwardly and into frictional engagement with an inner wall of the tubular member to thereby secure the end cap in position in the tubular member characterized in that said first end cap portion is formed in one piece and mounts both the bearing and the tubular member.

## Brief Description of the Drawings

The aforementioned features of the invention will be made more apparent from the description below of a preferred embodiment thereof given by way of example. In the description reference is made to the accompanying drawings in which:

FIGURE 1 illustrates a part side sectional elevation of the end portion of a conveyor roller; and

FIGURE 2 illustrates an end elevation of the same conveyor roller.

## Detailed Description of Drawings

Referring to the illustrations, a conveyor roller comprises a right circular tubular member 1 having an end cap 2 located in each end thereof. The end cap has a first portion 20 formed of a suitable plastics material such as polyurethane which has an axial hole 3 therethrough which is adapted to have a support shaft 4 passing therethrough. The tubular member 1 and end cap 2 are supported on the shaft by means of a roller bearing 5 which is press fitted onto the shaft such that no relative rotation is possible between the shaft and the inner race of the roller bearing. A stepped formation 6 in the first portion 20 is adapted to abut the outer race of the roller bearing in the assembled condition and a lock washer 7 located in a groove formed in the shaft is adapted to prevent relative movement of the end cap to the shaft. Located within the axial hole 3 are a plurality of seals 8 and seal housings 9 adapted to prevent the ingress of foreign particles into the roller bearing 5. The roller bearing 5 will be lubricated by a suitable lubricant in use. The outer peripheral surface of the first portion 20 has a stepped locating formation as shown at numeral 10 which provides an abutment surface against which the tubular member 1 abuts when the end cap 2 is correctly located within the end of the tubular member.

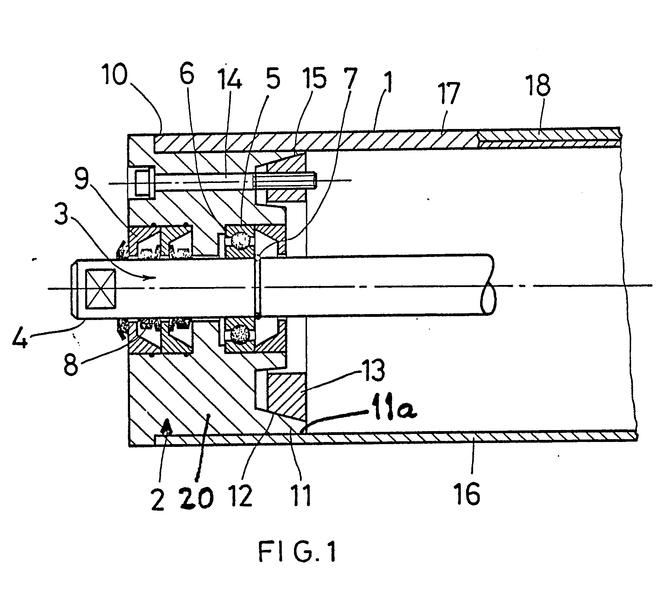

The operatively inner face of the first portion 40 has an annular rim 11 integrally formed therewith on the radially outer edge portion 11. The inner surface 12 of the edge portion 11 of the first end cap portion 20 tapers divergently away from the outer face of the end cap 2. The tapered surface 12 has an angle of taper of approximately 15°. A ring shaped element 13 (comprising a second portion of the end cap) has a cooperantly tapered radially outer surface 15, the ring shaped element being adapted to seat on the tapered radially inner surface 12 of the first portion 20. The ring shaped second portion 13 is movable towards and away from the first portion 20 by means of three screws 14 which pass through the first portion 20 into threaded engagement with threaded holes formed in the ring shaped second portion 13. By rotation of the screws 14, the ring shaped second portion 13 can be caused to move towards and away from the first portion 20. As shown in Figure 1 the ring shaped second portion 13 is in engagement with the tapered surface 12 of the annular radially outer edge portion 11. By moving the second portion 13 further towards the first portion 20, the two tapered surfaces will engage causing the annular edge portion 11 to move radially outwardly frictionally to engage its radially outer face 11a with the inner wall of the tubular member 1.

The extent of travel of the ring like shaped element 13 after engagement with the annular edge portion 11 will be limited to ensure that the tubular member 1 is not over stressed.

It will be possible to form the tubular member from a variety of different materials. In this regard it is specifically envisaged that the tubular member will be formed from steel or the like or alternatively that it will be formed from an unplasticised polyvinylchloride or like plastics material. Unplasticised PVC is considered particularly advantageous as it is relatively wear resistant and it is capable of absorbing at least some of the shocks and jolts generally associated with conveyor rollers. The wall of a steel tubular member will generally be thinner than the wall of a plastics tubular member of comparable load bearing characteristics. In Figure 1 a steel tubular member is shown at numeral 16 whilst a thicker walled plastics tubular member is shown at numeral 17. The end cap will be correspondingly shaped. Optionally a combination of plastics and steel tubular members may be used and this configuration is shown at numeral 18.

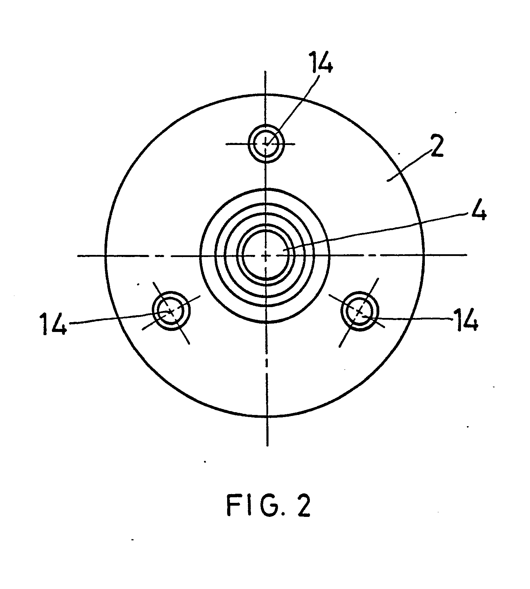

It is envisaged that the optimum configuration of screws 14 will be three screws evenly spaced around the shaft 4 as shown in Figure 2. By gradually screwing the screws into the ring like element 13 the said ring like element may be evenly drawn into wedging engagement with the surface 15.

There may be many variations to the above described embodiment without departing from the scope of the invention. Particular variations envisaged relate to the shape of the tapered surfaces. It is not necessary for both surfaces 12 and 15 to be tapered and the surfaces may taper in other directions. It is also not in fact necessary for the ring like element 13 to be ring like at all. It will for example be possible for the said ring like element to be replaced by a simple type of tapering nut or another shaped element which will engage a tapered surface on the body portion of the end cap. Other variations envisaged relate to the roller bearing assembly and sealing arrangement.

**Claims**

1. A conveyor roller comprising a right circular cylindrical tubular member (16, 17 or 18) supported on a shaft (4) by at least one end cap (2), the end cap having an axial hole (3) therethrough and a co-axial bearing (5) located therein by means of which the tubular member is rotatably supported on the shaft, the end cap including first and second relatively movable co-operant portions (20, 13) at least one of which has a tapered surface, the first end cap portion (20) being of plastics material, means (14) being provided to urge the two portions into co-operant engagement, the tapered surface, on engagement, being adapted to expand an annular, radially outer edge portion (11) of the first end cap portion (20) radially outwardly and into frictional engagement with an inner wall of the tubular member (16, 17 or 18) to thereby secure the end cap to the tubular member characterized in that said first end cap portion (20) is formed in one piece and mounts both the bearing (5) and the tubular member (16, 17 or 18).

2. A conveyor roller as claimed in claim 1, wherein the radially inner surface (12) of the edge portion (11) of the first end cap portion (20) is tapered and co-operates with the adjacent radially outer surface (15) of said second end cap portion (13).

3. A conveyor roller as claimed in claim 1 wherein the radially outer surface (15) of said second end cap portion (13) is tapered.

4. A conveyor roller as claimed in claim 1 wherein both surfaces (12, 15) of the end cap portions (20 and 13) are tapered.

5. A conveyor roller as claimed in claim 1 wherein the means for urging the two end cap portions (20, 13) into co-operant engagement comprise a plurality of screws (14) which are located in holes formed in the said first end cap portion and evenly spaced around the central axis thereof, the screws being engaged in threaded holes formed in said second end cap portion (13), rotation of the screws in use being adapted to move the two portions (20, 13) into and out of engagement.

6. A conveyor roller as claimed in claim 1 wherein at least said the first end cap portion (20) is formed of polyurethane.

7. A conveyor roller as claimed in claim 1 wherein the tubular member (17) is formed of an unplasticised polyvinylchloride.

8. A conveyor roller as claimed in claim 1 wherein the tubular member (18) includes an inner sleeve of steel and an outer sleeve of unplasticised polyvinylchloride.

9. A conveyor roller as claimed in claim 1 wherein said first end cap portion has a locating formation (10) formed thereon to ensure aligned engagement with the tubular member.

10. An end cap (2) adapted to be located in a tubular member (16, 17 or 18) of a conveyor roller, the end cap having an axial hole (3) passing therethrough adapted to have a bearing (5) located therein and adapted to have a support shaft (4) passing therethrough in rotational engagement with the bearing, the end cap including first and second relatively movable co-operant portions (20, 13), at least one of which has a tapered surface, the first end cap portion (20) being of plastics material, means (14) being provided to urge the two portions into co-operant engagement, the tapered surface on engagement, being adapted to urge an annular, radially outer edge portion (11) of the first end cap portion (20) radially outwardly and into frictional engagement with an inner wall of the tubular member (16, 17 or 18) to thereby secure the end cap in position in the tubular member characterized in that said first end cap portion (20) is formed in one piece and mounts both the bearing (5) and the tubular member (16, 17 or 18).

**Patentansprüche**

1. Förderrolle, bestehend aus einem von zumindest einer Endkappe (2) auf einer Achse (4) abgestützten geraden kreiszylindrischen Rohrteil (16; 17; 18), wobei der Endkappe eine axiale Durchgangsöffnung (3) und ein in dieser angeordnetes koaxiales Lager (5) aufweist, mittels dessen das Rohrteil drehbar auf der Achse abgestützt ist, und wobei die Endkappe ferner erste und zweite relativbewegbare zusammenwirkende Bereiche (20, 13) aufweist, von denen zumindest einer eine kegelige Oberfläche aufweist, der erste Endkappenbereich (20) aus Kunststoffmaterial besteht, Mittel (14) vorgesehen sind, um die beiden Bereiche in einen zusammenwirkenden Eingriff zu drücken, und mittels der kegeligen Oberfläche in Eingriffsstellung ein ringförmiger, radial äußerer Randbereich (11) des ersten Endkappenbereichs (20) radial nach außen und in Reibungseingriff mit einer Innenwand des Rohrteils (16; 17; 18) zur Befestigung der Endkappe am Rohrteil aufweitbar ist, dadurch gekennzeichnet, daß der erste Endkappenbereich (20) einstückig ausgebildet ist und sowohl das Lager (5) als auch das Rohrteil (16; 17; 18) abstützt.

2. Förderrolle nach Anspruch 1, dadurch gekennzeichnet, daß die radial innere Oberfläche (12) des Randbereichs (11) des ersten Endkappenbereichs (20) kegelig ausgebildet ist und mit der angrenzenden radial äußeren Oberfläche (15) des zweiten Endkappenbereichs (13) zusammenwirkt.

3. Förderrolle nach Anspruch 1, dadurch gekennzeichnet, daß die radial äußere Oberfläche (15) des zweiten Endkappenbereichs (13) kegelig ausgebildet ist.

4. Förderrolle nach Anspruch 1, dadurch gekennzeichnet, daß beide Oberflächen (12, 15) der Endkappenbereiche (20, 13) kegelig ausgebildet sind.

5. Förderrolle nach Anspruch 1, dadurch gekennzeichnet, daß die Mittel zum Drücken der beiden Endkappenbereiche (20, 13) in den zusammenwirkenden Eingriff eine Mehrzahl von Schrauben (14) umfassen, die in im ersten Endkappenbereich gebildeten und in gleichmäßigem Abstand um dessen Mittelachse verteilten Öffnungen untergebracht sind, und daß die Schrauben mit im zweiten Endkappenbereich (13) gebildeten Gewindelöchern in Eingriff gehalten sind, wobei durch eine Drehung der Schrauben die beiden Bereiche (20, 13) in und außer Eingriff bewegbar sind.

6. Förderrolle nach Anspruch 1, dadurch gekennzeichnet, daß zumindest der erste Endkappenbereich (20) von Polyurethan gebildet ist.

7. Förderrolle nach Anspruch 1, dadurch gekennzeichnet, daß das Rohrteil (17) von einem weichmacherfreien Polyvinylchlorid gebildet ist.

8. Förderrolle nach Anspruch 1, dadurch gekennzeichnet, daß das Rohrteil (18) eine Innenhülse aus Stahl und eine Außenhülse aus weichmacherfreiem Polyvinylchlorid aufweist.

9. Förderrolle nach Anspruch 1, dadurch gekennzeichnet, daß der erste Endkappenbereich eine Zentrierungsausbildung (10) zur Gewährleistung eines fluchtenden Eingriffs mit dem Rohrteil aufweist.

10. Endkappe (2) zur Anbringung in einem Rohrteil (16; 17; 18) einer Förderrolle, wobei die Endkappe eine axiale Durchgangsöffnung (3) zur Anordnung eines Lagers (5) in dieser und für den Durchgang einer Tragachse (4) in Dreheingriff mit dem Lager aufweist und ferner erste und zweite relativbewegbare zusammenwirkende Bereiche (20, 13) aufweist, von denen zumindest einer eine kegelige Oberfläche aufweist, der erste Endkappenbereich (20) aus Kunststoffmaterial besteht, Mittel (14) vorgesehen sind, um die beiden Bereiche in einen zusammenwirkenden Eingriff zu drücken, und mittels der kegeligen Oberfläche in Eingriffsstellung ein ringförmiger, radial äußerer Randbereich (11) des ersten Endkappenbereichs (20) radial nach außen und in Reibungseingriff mit einer Innenwand des Rohrteils (16; 17; 18) zur Befestigung der Endkappe in ihrer Position im Rohrteil drückbar ist, dadurch gekennzeichnet, daß der erste Endkappenbereich (20) einstückig ausgebildet ist und sowohl das Lager (5) als auch das Rohrteil (16; 17; 18) abstützt.

**Revendications**

1. Rouleau de convoyeur comprenant un organe tubulaire cylindrique à section droite circulaire (16, 17 ou 18) supporté sur un arbre (4) par au moins un bouchon d'extrémité (2), ce bouchon d'extrémité étant percé de part en part d'un trou axial (3) et logeant un palier coaxial (5) au moyen duquel l'organe tubulaire est supporté à rotation par l'arbre, le bouchon d'extrémité comprenant des première et seconde parties (20, 13) mobiles l'une par rapport à l'autre et coopérant entre elles, l'une au moins de ces parties présentant une surface conique, la première partie (20) du bouchon d'extrémité étant en matière plastique, des moyens (14) étant prévus pour appliquer les deux parties en contact l'une contre l'autre, la surface conique étant adaptée, lors du contact, de manière à dilater radialement vers l'extérieur une portion marginale annulaire (11), externe dans le sens radial, de la première partie (20) du bouchon d'extrémité, pour l'appliquer en contact à frottement contre une paroi interne de l'organe tubulaire (16, 17 ou 18), de manière à fixer ainsi le bouchon d'extrémité à l'organe tubulaire, caractérisé en ce que la première partie (20) du bouchon d'extrémité est réalisée en une seule pièce qui assure le montage à la fois du palier (5) et de l'organe tubulaire (16, 17 ou 18).

2. Rouleau de convoyeur suivant la revendication 1 caractérisé en ce que la surface interne dans le sens radial (12) de la portion marginale (11) de la première partie (20) du bouchon d'extrémité est conique et coopère avec la surface externe, dans le sens radial, et adjacente (15) de la seconde partie (13) du bouchon d'extrémité.

3. Rouleau de convoyeur suivant la revendication 1 caractérisé en ce que la surface externe (15), dans le sens radial, de la seconde partie (13) du bouchon d'extrémité est conique.

4. Rouleau de convoyeur suivant la revendication 1 caractérisé en ce que les deux surfaces (12, 15) des parties (20 et 13) du bouchon d'extrémité sont coniques.

5. Rouleau de convoyeur suivant la revendication 1 caractérisé en ce que les moyens prévus pour appliquer les deux parties (20, 13) du bouchon d'extrémité en contact l'une contre l'autre comprennent une pluralité de vis (14) qui sont logées dans des trous formés dans la première partie du bouchon d'extrémité et qui sont espacés d'une manière régulière autour de l'axe central de celui-ci, ces vis étant engagées dans des trous taraudés formés dans la seconde partie (13) du bouchon d'extrémité si bien qu'une rotation de ces vis provoque un déplacement relative des deux parties (20, 13) pour les appliquer l'une contre l'autre ou les écarter.

6. Rouleau de convoyeur suivant la revendication 1 caractérisé en ce qu'au moins la première partie (20) du bouchon d'extrémité est réalisé en polyuréthane.

7. Rouleau de convoyeur suivant la revendication 1 caractérisé en ce que l'organe tubulaire (17) est réalisé en un chlorure de polyvinyle non plastifié.

8. Rouleau de convoyeur suivant la revendication 1 caractérisé en ce que l'organe tubulaire (18) comporte un manchon interne en acier et un manchon externe en chlorure de polyvinyle non plastifié.

9. Rouleau de convoyeur suivant la revendication 1 caractérisé en ce que la première partie du bouchon d'extrémité présente une saillie de mise en position (10) formée sur elle afin d'assurer l'alignement avec l'organe tubulaire (16, 17 ou 18).

10. Bouchon d'extrémité (2) adapté de manière à être logé dans un organe tubulaire (16, 17 ou 18) d'un rouleau de convoyeur, ce bouchon d'extrémité étant percé de part en part d'un trou axial (3) destiné à recevoir un palier (5) logé dans ce trou et traversé par un arbre support (4) logé à rotation dans le palier, le bouchon d'extrémité comprenant des première et seconde parties (20, 13) mobiles l'une par rapport à l'autre et coopérant entre elles, l'une au moins de ces parties présentant une surface conique, la première partie (20) du bouchon d'extrémité étant en matière plastique, des moyens (14) étant prévus pour appliquer les deux parties en contact l'une contre l'autre, la surface conique étant adaptée, lors du contact, de manière à dilater radialement vers l'extérieur une portion marginale annulaire (11), externe dans le sens radial, de la première partie (20) du bouchon d'extrémité, pour l'appliquer en contact à frottement contre une paroi interne de l'organe tubulaire (16, 17 ou 18), de manière à fixer ainsi le bouchon d'extrémité à l'organe tubulaire, caractérisé en ce que la première partie (20) du bouchon d'extrémité est réalisée en une seule pièce qui assure le montage à la fois du palier (5) et de l'organe tubulaire (16, 17 ou 18).

FIG.1

FIG. 2